(19) **Europäisches Patentamt**
**European Patent Office**
**Office européen des brevets**

(11) **EP 1 346 869 B1**

(12) **EUROPÄISCHE PATENTSCHRIFT**

(45) Veröffentlichungstag und Bekanntmachung des Hinweises auf die Patenterteilung:
**18.07.2007 Patentblatt 2007/29**

(51) Int Cl.:
***B60K 31/00*** *(2006.01)*

(21) Anmeldenummer: **02022009.1**

(22) Anmeldetag: **01.10.2002**

(54) **Geschwindigkeitsregelvorrichtung für Kraftfahrzeuge mit Handschaltgetriebe**

Speed control device for vehicles with manual gearbox

Dispositif de commande de vitesse pour véhicules avec boîte de vitesse manuelle

(84) Benannte Vertragsstaaten:
**DE FR GB IT SE**

(30) Priorität: **09.03.2002 DE 10210545**

(43) Veröffentlichungstag der Anmeldung:
**24.09.2003 Patentblatt 2003/39**

(73) Patentinhaber: **ROBERT BOSCH GMBH**
**70442 Stuttgart (DE)**

(72) Erfinder:
- **Hellmann, Manfred**
  **71706 Hardthof (DE)**
- **Erhart, Robert**
  **71254 Ditzingen (DE)**
- **Winner, Hermann**
  **76467 Bietigheim (DE)**

(56) Entgegenhaltungen:
**EP-A- 1 034 962      EP-A- 1 068 976**
**DE-A1- 3 912 359      DE-A1- 19 833 838**

- **WINNER ET AL: "Adaptive Cruise Control System Aspects and Development Trends" SAE TRANSACTIONS, SOCIETY OF AUTOMOTIVE ENGINEERS, INC., WARRENDALE, PA, US, Bd. 105, Nr. 961010, 1996, Seiten 1412-1421, XP002124577 ISSN: 0096-736X**
- **WOLL J D: "RADAR-BASED ADAPTIVE CRUISE CONTROL FOR TRUCKS" AUTOMOTIVE ENGINEERING INTERNATIONAL, SAE INTERNATIONAL, WARRENDALE, PA, US, Bd. 106, Nr. 11, November 1998 (1998-11), Seiten 130-132, XP000788757 ISSN: 1543-849X**

EP 1 346 869 B1

**Beschreibung**

STAND DER TECHNIK

Die Erfindung betrifft eine Geschwindigkeitsregelvorrichtung für Kraftfahrzeuge mit Handschaltgetriebe, mit einer Einrichtung zur Bestimmung des Beschleunigungsbedarfs, einer Ausgabeeinrichtung zur Ausgabe von Informationen an den Fahrer sowie einer Steuereinrichtung hierfür.

Für Kraftfahrzeuge sind Geschwindigkeitsregelsysteme bekannt, mit denen die Geschwindigkeit des Fahrzeugs auf eine vom Fahrer gewählte Wunschgeschwindigkeit geregelt werden kann. Darüber hinaus kann mit Hilfe eines Abstandssensors, beispielsweise mit Hilfe eines Radar- oder Lidar-Sensors, der Abstand zu einem vorausfahrenden Fahrzeug gemessen werden. Die Geschwindigkeitsregelung wird dann so modifiziert, daß ein vorgegebener, vorzugsweise geschwindigkeitsabhängiger Abstand zu dem als Zielobjekt ausgewählten vorausfahrenden Fahrzeug eingehalten wird. Solche Systeme werden auch als adaptive Geschwindigkeitsregelsysteme oder ACC-Systeme (Adaptive Cruise Control) bezeichnet.

Der Aufbau und die Arbeitsweise eines solchen ACC-Systems werden beispielsweise beschrieben in Winner: "Adaptive Cruise Control " in Automotive Electronics Handbook, Ronald K. Jurgen (Hrsg.), 2. Auflage, Mac Graw-Hill (1999) Kapitel 30.1.

Da ein ACC-System in erster Linie dazu dient, den Fahrer zu entlasten und den Komfort zu erhöhen, werden diese Systeme häufig bei Fahrzeugen mit Automatikgetriebe eingesetzt, bei denen durch die automatische Wahl der Getriebestufe eine weitere Entlastung des Fahrers erreicht wird. Es gibt jedoch nicht wenige Kraftfahrer, die zwar auf die Funktionen eines Geschwindigkeitsregelsystems oder ACC-Systems nicht verzichten wollen, die es aber dennoch vorziehen, selbst über die Wahl der Getriebestufe zu entscheiden. Deshalb ist es zweckmäßig, Geschwindigkeitsregelsysteme oder, spezieller, ACC-Systeme auch bei Fahrzeugen mit Handschaltgetriebe anzubieten, ebenso bei Fahrzeugen mit einem elektronischen Schaltgetriebe oder mit einem Automatikgetriebe, bei dem zwar die Kupplungs- und Gangwechselvorgänge automatisch ablaufen, aber der Fahrer die Wahl hat, durch einen von Hand eingegebenen Befehl selbst die Getriebestufe zu bestimmen. Der Begriff "Handschaltgetriebe" ist deshalb hier in einem umfassenden Sinne zu verstehen und schließt alle Arten von Getriebe ein, bei denen der Fahrer durch Eingabe eines Befehls direkt auf die Wahl der Getriebestufe Einfluß nehmen kann.

DE 198 33 838 A1 beschreibt eine Geschwindigkeitsregelvorrichtung für Fahrzeuge mit Handschaltgetriebe, bei der die Regelfunktion bei Betätigung der Kupplung unterbrochen und danach automatisch wieder aufgenommen wird.

Bei einigen bekannten Geschwindigkeitsregelvorrichtungen erfolgt bei Fahrzeugen mit Handschaltgetriebe eine automatische Abschaltung der Geschwindigkeitsregelfunktion, wenn in dem eingelegten Gang - etwa auf Steigungsstrecken - die eingestellte Wunschgeschwindigkeit nicht gehalten werden kann. Die Selbstabschaltung der Regelfunktion ist dann mit einer abrupten Abnahme der Fahrgeschwindigkeit verbunden, die den Fahrer und den Nachfolgeverkehr irritiert.

Aus der EP 1034 962 A1 ist ein Verfahren und eine Vorrichtung zur Regelung des Abstands eines Fahrzeugs bekannt, das mit einem manuellen Schaltgetriebe ausgestattet ist, wobei ein Rechner über einen Sensor die Betätigung des Kupplungspedals erkennt und im Fall, dass das Getriebe angekuppelt ist und die Drehzahl des Motors einen zuvor für jeden Gang gesetzten ersten Schwellwert überschreitet, die Erhöhung der Drehzahl beschränkt wird und im Fall, dass der Rechner detekiert, dass der Fahrer auskuppelt, die Drehzahl des Motors reduziert wird und das Bremssystem des Fahrzeugs aktiviert wird, wenn das Fahrzeug diesseits eines Sollabstands fährt.

AUFGABE, LÖSUNG UND VORTEILE DER ERFINDUNG

Aufgabe der Erfindung ist es, eine Geschwindigkeitsregelvorrichtung zu schaffen, die speziell bei Fahrzeugen mit Handschaltgetriebe eine Verbesserung oder Aufrechterhaltung der Regelfunktion ermöglicht

Diese Aufgabe wird erfindungsgemäß durch die kennzeichnenden Merkmale von Anspruch 1 gelöst.

In Fahrsituationen, in denen die Geschwindigkeitsregelfunktion typischerweise aktiv ist, etwa bei längeren Autobahnfahrten, neigen auch Fahrer, die an sich auf einer manuellen Wahl der Getriebestufe bestehen, dazu, dem Antriebssystem des Fahrzeugs weniger Aufmerksamkeit zu schenken, zumal der Fahrer bei aktiver Geschwindigkeitsregelung normalerweise den Fuß vom Gaspedal nimmt, so daß ihm die direkte Rückmeldung über das Gaspedal fehlt. Es kann deshalb sehr leicht vorkommen, daß die Getriebestufe nicht optimal angepaßt ist, ohne daß dies vom Fahrer sogleich bemerkt wird. Der Motor läuft dann unter Umständen über längere Zeit nicht mit der optimalen Drehzahl, was nicht nur zu einer Beeinträchtigung des Regelverhaltens des Geschwindigkeitsregelsystems, sondern auch zu erhöhtem Kraftstoffverbrauch und gegebenenfalls sogar zu einer Schädigung des Motors führen kann. Es wird deshalb der Fahrer durch eine optische oder akustische Schaltaufforderung auf diesen Zustand aufmerksam gemacht und dazu aufgefordert, die Getriebestufe von Hand anzupassen.

Die Ausgabe einer Schaltaufforderung an den Fahrer ist bei Kraftfahrzeugen grundsätzlich bereits bekannt, dient jedoch bisher generell nur dazu, den Fahrer zu einer kraftstoffsparenden Fahrweise anzuhalten, etwa dadurch, daß bei hoher Drehzahl und niedriger Last eine Aufforderung zum Hochschalten ausgegeben wird. Die Schaltaufforderung erfolgt zumindest unter anderem in Abhängigkeit von dem im Rahmen der Geschwindigkeitsregelung ermittelten Beschleunigungsbedarf.

Ein typisches Beispiel für eine Situation, in der sich die Schaltaufforderung vorteilhaft auswirkt, ist etwa der Fall, daß es auf der Überholspur zu einer vorübergehenden Stockung des Verkehrs kommt, etwa wegen eines Überholmanövers eines LKW. Der Radarsensor des ACC-Systems stellt dann eine erhebliche Abnahme der Geschwindigkeit des vorausfahrenden Fahrzeugs fest und paßt die Geschwindigkeit des eigenen Fahrzeugs an, so daß diese Geschwindigkeit deutlich unter die vom Fahrer gewählte Wunschgeschwindigkeit absinkt. Wenn der Fahrer die ursprüngliche Getriebestufe beibehält und sich dann der Stau wieder auflöst, steht für die nötige Beschleunigung des Fahrzeugs kein ausreichendes Motordrehmoment zur Verfügung da der Motor zu untertourig läuft. Der Kraftstoffverbrauch nimmt zu, die Motorbelastung steigt und außerdem wird der Überholvorgang unnötig verzögert, so daß auf einer stark belasteten Autobahn die Staugefahr zunimmt. In dieser Situation wird nun durch die Schaltaufforderung der Fahrer dazu veranlaßt, mindestens einen Gang herunterzuschalten, so daß die ursprünglich gewählte Wunschgeschwindigkeit schneller und unter günstigeren Motorbetriebsbedingungen wieder erreicht werden kann.

Bei einer einfachen Geschwindigkeitsregelvorrichtung ohne Abstandsregelfunktion kann der Beschleunigungsbedarf beispielsweise durch ein Drosselklappen-Stellsignal gegeben sein, das im automatischen Regelbetrieb den vom Fahrer über das Gaspedal eingegebenen Stellbefehl ersetzt. Bei einem ACC-System wird dagegen üblicherweise eine Sollbeschleunigung berechnet, und der Eingriff in das elektronische Motormanagement erfolgt in Abhängigkeit von der Abweichung zwischen Soll- und Istbeschleunigung. Wenn sich anhand der aktuellen Betriebparameter des Motors, etwa anhand des bei der aktuellen Drehzahl maximal erreichbaren Motordrehmoments ergibt, daß der Beschleunigungsbedarf in der aktuellen Getriebestufe nicht befriedigt werden kann, so wird eine Schaltaufforderung zum Herunterschalten ausgegeben. Zur Feststellung der Leistungsgrenze können auch andere Größen herangezogen werden, beispielsweise die Drosselklappenstellung, die Einspritzmenge, die Antriebskraft, das Getriebeausgangsmoment, die Motorleistung etc.

Erfindungsgemäß wird anhand der Betriebsdaten des Motors das Maximaldrehmoment des Motors bei der aktuellen Motordrehzahl bestimmt und mit einer vom Beschleunigungsbedarf abhängigen ACC-Momentenanforderung verglichen, und die Schaltaufforderung wird ausgegeben, wenn die ACC-Momentenanforderung das Maximaldrehmoment um mehr als einen bestimmten Schwellenwert übersteigt. Die ACC-Momentenanforderung ist in erster Näherung eine lineare Funktion der Sollbeschleunigung, doch sind die Parameter dieser Funktion von den jeweiligen Betriebsbedingungen abhängig, insbesondere von der Fahrbahnsteigung, dem Fahrzeuggewicht und gegebenenfalls der Zuladung, dem Luftwiderstand, Gegenwind und dergleichen. Die aktuelle Beziehung zwischen der Sollbeschleunigung und der ACC-Momentenanforderung läßt sich beispielsweise durch Vergleich der Istbeschleunigung mit dem aktuellen Motordrehmoment ermitteln, wobei das aktuelle Motordrehmoment seinerseits entweder direkt gemessen oder aus den aktuellen Betriebsparametern des Motors berechnet wird.

Für die Entscheidung, ob eine Schaltaufforderung ausgegeben wird oder nicht, wird vorzugsweise auch überprüft, ob die Motordrehzahl innerhalb zulässiger Grenzen liegt und/oder nach erfolgtem Gangwechsel innerhalb zulässiger Grenzen liegen wird. So sollte beispielsweise eine Schaltaufforderung zum Herunterschalten unterbleiben, wenn die aktuelle Motordrehzahl über einer bestimmten Drehzahlschwelle liegt. Diese Drehzahlschwelle sollte so ausgelegt sein, daß nach dem Zurückschalten um eine Gangstufe eine ausreichende Drehzahl- und Leistungsreserve verbleibt. Wahlweise kann auch geprüft werden, ob die künftige Motordrehzahl, die durch die aktuelle Fahrzeuggeschwindigkeit und das Übersetzungsverhältnis im nächsttieferen Gang gegeben ist, unterhalb eines zulässigen Schwellenwertes bleibt.

Weiterhin ist es zweckmäßig, mit steigender Motordrehzahl auch den Drehmoment-Schwellenwert zu erhöhen, so daß die Schaltaufforderung bei hoher Drehzahl nur dann erfolgt, wenn eine sehr große Diskrepanz zwischen der ACC-Momentenanforderung und dem Maximaldrehmoment besteht.

Weiterhin sollte eine Schaltaufforderung zum Herunterschalten auch dann ausgegeben werden, wenn die aktuelle Motordrehzahl unzulässig niedrig ist.

Wenn sich der Abstand zu einem vorausfahrenden Fahrzeuge verringert, greift ein ACC-System überlicherweise auch in das Bremssystem des Fahrzeugs ein, um die Fahrzeuggeschwindigkeit angemessen zu verringern. In diesem Fall ist also der vom ACC-System bestimmte Beschleunigungsbedarf negativ. Wahlweise kann die Schaltaufforderung zum Herunterschalten auch als Reaktion auf einen solchen negativen Beschleunigungsbedarf erfolgen, um das Bremsmoment des Motors auszunutzen und die Fahrzeugbremsen zu schonen. Dies hat zugleich den Vorteil, daß eine spätere Wiederbeschleunigung des Fahrzeugs ohne Verzögerung erfolgen kann, da die Getriebestufe bereits zuvor herabgesetzt wurde.

Gemäß einer zweckmäßigen Weiterbildung der Erfindung werden für die Entscheidung über eine Schaltaufforderung unterschiedliche Kriterien herangezogen, denen jeweils unterschiedliche Prioritäten zugeordnet sind. Beispiele für solche Kriterien sind, geordnet nach fallenden Prioritäten: Einhaltung zulässiger Drehzahlgrenzen, Erfüllung der ACC-Momentenanforderung und verbrauchsgünstiger Betrieb des Motors. Schaltaufforderungen mit niedriger Priorität werden dann durch solche mit höherer Priorität übersteuert. Zweckmäßigerweise wird bei der Ausgabe der Schaltaufforderung an den Fahrer auch die Prioritätsstufe kenntlich gemacht.

Die Ausgabe der Schaltaufforderung kann auf unterschiedlichen Wegen erfolgen, z. B. optisch, akustisch, durch synthetische Sprachausgabe oder auch haptisch durch ein Vibrationssignal und dergleichen. Die unterschiedlichen Prioritäten können bei akustischer Ausgabe durch unterschiedliche Lautstärke oder Tonhöhe kenntlich gemacht werden und/oder bei optischer Ausgabe etwa durch dauerndes oder nur vorübergehendes Aufleuchten einer Signallampe oder durch Farbumschlag oder Blinken der Signallampe.

KURZBESCHREIBUNG DER ZEICHNUNGEN

Im folgenden werden Ausführungsbeispiele der Erfindung anhand der Zeichnungen näher erläutert.
Es zeigen:

Figur 1     eine schematische Darstellung der wesentlichen Komponenten eines ACC-Systems in einem Kraftfahrzeug;

Figur 2     ein Blockdiagramm von Komponenten des ACC-Systems;

Figur 3     ein Flußdiagramm zur Erläuterung der Arbeitsweise des Systems bei der Ausgabe einer Schaltaufforderung; und

Figur 4     eine graphische Darstellung der Drehzahlabhängigkeit eines Drehmoment-Schwellenwertes

BESCHREIBUNG VON AUFÜHRUNGSBEISPIELEN

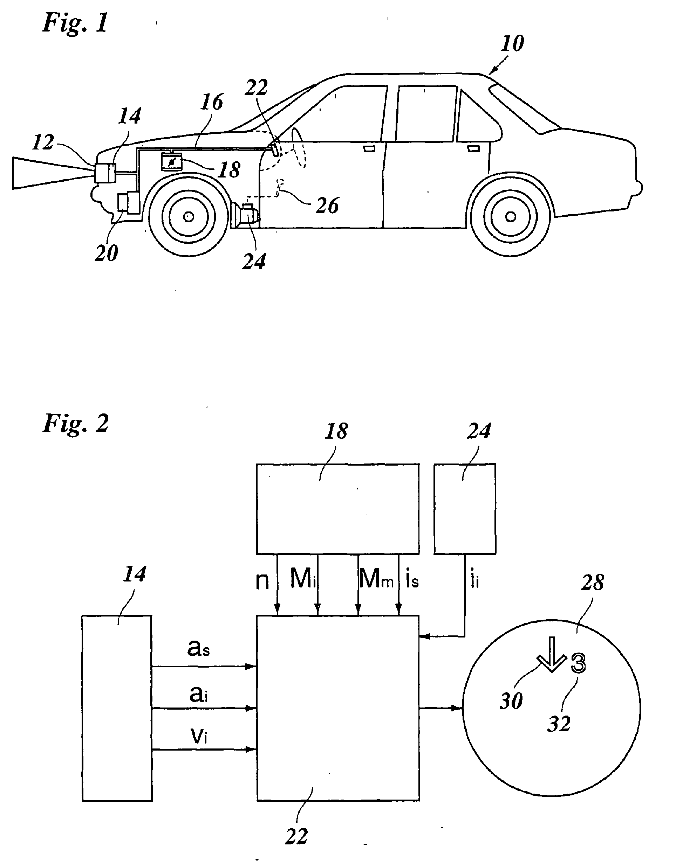

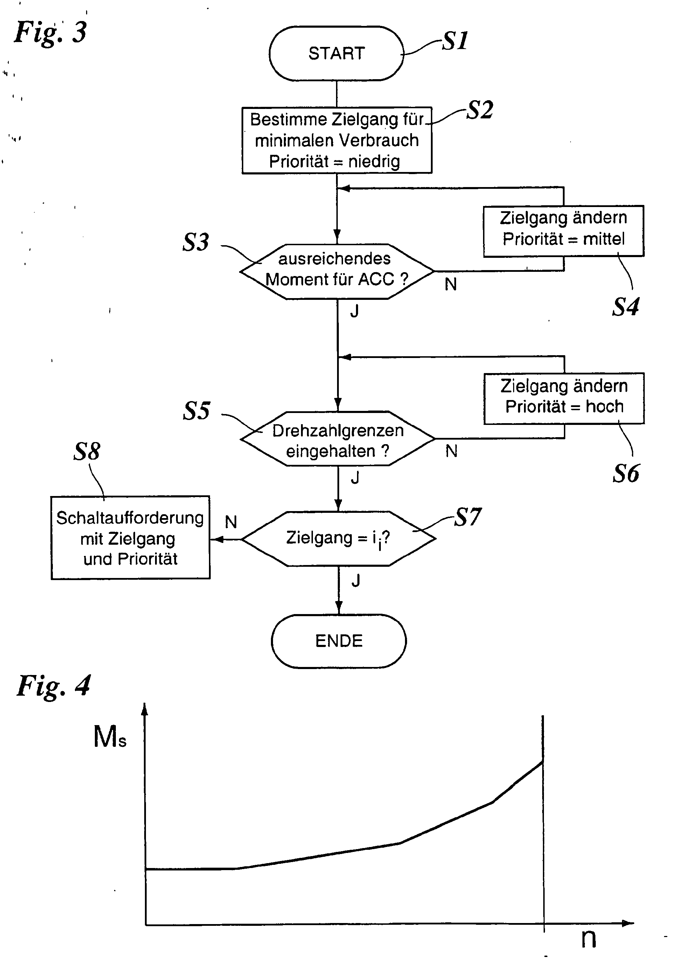

Das in Figur 1 gezeigte Kraftfahrzeug 10 weist als Abstandssensor 12 einen an der Frontpartie des Kraftfahrzeugs angebrachten Radarsensor auf, in dessen Gehäuse auch eine ACC-Steuereinheit 14 untergebracht ist. Die ACC-Steuereinheit 14 ist über einen Datenbus 16 (CAN) mit einer elektronischen Antriebs-Steuereinheit 18, einer Bremssystem-Steuereinheit 20 sowie mit einer MMI-Steuereinheit 22 einer Mensch/Maschine-Schnittstelle (MMI) verbunden.
Der Abstandssensor 12 mißt mit Hilfe eines Mehrstrahlradars die Abstände, Relativgeschwindigkeiten und Azimutwinkel von vor dem Fahrzeug befindlichen Objekten, die Radarwellen reflektieren. Die in regelmäßigen Zeitabständen, z. B. alle 10 ms empfangenen-Rohdaten werden in der ACC-Steuereinheit 14 ausgewertet, um einzelne Objekte zu identifizieren und zu verfolgen und um insbesondere ein unmittelbar auf der eigenen Fahrspur vorausfahrendes Fahrzeug zu erkennen und als Zielobjekt auszuwählen. Durch Befehle an die Antriebs-Steuereinheit 18 und die Bremssystem-Steuereinheit 20 regelt die ACC-Steuereinheit 14 die Geschwindigkeit des Fahrzeugs 10. Die Mensch/Maschine-Schnittstelle, die durch die MMI-Steuereinheit 22 gesteuert wird, umfaßt verschiedene Bedienungs- und Anzeigeelemente auf dem Armaturenbrett des Fahrzeugs und dient unter anderem dazu, Bedienbefehle des Fahrers an die ACC-Steuereinheit 14 zu übermitteln und Meldungen der ACC-Steuereinheit 14 an den Fahrer auszugeben. Zu diesem Zweck kann die MMI auch einen Lautsprecherausgang für akustische Signale oder synthetische Sprache aufweisen.
Wenn kein vorausfahrendes Fahrzeug geortet wird, regelt die ACC-Steuereinheit 14 die Geschwindigkeit des Fahrzeugs 10 auf eine vom Fahrer gewählte Wunschgeschwindigkeit. Ist dagegen ein vorausfahrendes Fahrzeug, dessen Geschwindigkeit kleiner ist als die des eigenen Fahrzeugs, als Zielobjekt erfaßt worden, so wird die Geschwindigkeit des Fahrzeugs 10 so geregelt, daß ein angemessener Abstand zu dem vorausfahrenden Fahrzeug eingehalten wird.
Im gezeigten Beispiel weist das Fahrzeug 10 ein Handschaltgetriebe 24 mit einem Schalthebel 26 auf. Die MMI-Steuereinheit 22 wird beispielsweise durch einen Mikrokomputer gebildet und ist so programmiert, daß sie eine Schaltaufforderung an den Fahrer ausgibt, wenn die von Hand gewählte Getriebestufe nicht optimal ist.
Wie Figur 2 zeigt, erhält die MMI-Steuereinheit 22 verschiedene Signale von der ACC-Steuereinheit 14 und von der Antriebs-Steuereinheit 18. Außerdem erhält sie vom Handschaltgetriebe 24 ein Signal $i_i$, das die derzeit eingelegte Getriebestufe angibt. Anhand dieser Informationen entscheidet die MMI-Steuereinheit 22, ob über eine Ausgabeeinrichtung 28 eine Schaltaufforderung auszugeben ist oder nicht. Die Ausgabeeinrichtung 28 ist beispielsweise auf dem Armaturenbrett des Fahrzeugs angeordnet und kann in einer Leuchtanzeige bestehen, die in ein anderes Anzeigeinstrument, beispielsweise den Tachometer integriert ist. Im gezeigten Beispiel besteht die Schaltaufforderung 30 für das Herunterschalten im Aufleuchten eines abwärts gerichteten Pfeils. Eine Schaltaufforderung für das Heraufschalten würde entsprechend durch einen aufwärts gerichteten Pfeil symbolisiert. Weiterhin wird durch eine Ziffernanzeige 32 der einzulegende Zielgang angegeben, im gezeigten Beispiel der dritte Gang. Je nach Ausführungsform kann anstelle des Zielgangs durch die Ziffernanzeige auch die Zahl der zu schaltenden Getriebestufen angegeben werden, also beispielsweise bei einer Aufforderung zum Herunterschalten vom fünften in den dritten Gang die Ziffer 2 in Kombination mit dem abwärts gerichteten Pfeil.
Die Funktionsweise der MMI-Steuereinheit 22 bei der Ansteuerung der Anzeigeeinrichtung 28 soll nun unter Bezugnahme auf das Flußdiagramm in Figur 3 näher erläutert werden.

In Schritt S1 wird eine Programmroutine gestartet, die entscheidet, ob eine Schaltaufforderung auszugeben ist oder nicht. Diese Programmroutine wird zyklisch wiederholt.

In Schritt S2 wird zunächst anhand der aktuellen Betriebsparameter des Motors ein Zielgang bestimmt, der unter den gegenwärtigen Betriebsbedingungen einen minimalen Kraftstoffverbrauch ermöglicht. Da dieser Zielgang in erster Linie von den aktuellen Betriebsbedingungen des Motors abhängig ist, erfolgt seine Berechnung zweckmäßigerweise nicht in der MMI-Steuereinheit 22, sondern vielmehr in der Antriebs-Steuereinheit 18, in der die Motordaten unmittelbar verfügbar sind. Als Beispiel kann angenommen werden, daß in der Antriebs-Steuereinheit 18 eine Software implementiert ist, die normalerweise zur Wahl der Getriebestufe bei einem Automatikgetriebe dient. Der auf auf diese Weise berechnete Wert is für die Soll-Getriebestufe wird von der MMI-Steuereinheit 22 in Schritt S2 einfach von der Antriebs-Steuereinheit 18 übernommen und in die Varialbe "Zielgang" eingesetzt. Weiterhin wird in Schritt S2 ein Prioritätsparameter auf den Wert "niedrig" gesetzt.

In Schritt S3 wird dann überprüft, ob bei dem in Schritt S2 bestimmten Zielgang ein ausreichendes Motordrehmoment für die ACC-Regelfunktion zur Verfügung steht. Zu diesem Zweck erhält die MMI-Steuereinheit 22 (Figur 2) von der ACC-Steuereinheit 14 Daten, die die für die ACC-Regelung verlangte Sollbeschleunigung $a_s$ (Beschleunigungs-bedarf), die Istbeschleunigung $a_i$ des Fahrzeugs sowie die Istgeschwindigkeit $v_i$ des Fahrzeugs angeben. Von der Antriebs-Steuereinheit 18 werden Daten empfangen, die die aktuelle Motordrehzahl n, das Ist-Motordrehmoment Mi und das bei der aktuellen Drehzahl erreichbare Maximaldrehmoment $M_m$ des Motors angeben. Aus der Sollbeschleunigung as wird zunächst eine ACC-Momentenanforderung $M_{ACC}$ berechnet. Diese Größe gibt das Ausgangsdrehmoment des Motors an, das zur Erzielung der Sollbeschleunigung as benötigt wird. Der Zusammenhang zwischen der Sollbeschleunigung as und der ACC-Momentenanforderung $M_{ACC}$ ist für einen gegebenen Zielgang in erster Näherung durch die (bis auf die Zuladung) bekannte Gesamtmasse des Fahrzeugs und durch den Luftwiderstand bestimmt, der seinerseits nach einer bekannten Funktion von der Fahrzeuggeschwindigkeit $v_i$ abhängig ist. Für eine genauere Bestimmung der ACC-Momentenanforderung sind Korrekturen erforderlich, die die Steigung der Fahrbahn sowie gegebenenfalls Gegenwindeinflüsse und die Zuladung berücksichtigen. Diese Korrekturen lassen sich beispielsweise dadurch bestimmen, daß - vorzugsweise bei unterschiedlichen Beschleunigungswerten - die Istbeschleunigung $a_i$ mit dem jeweiligen Ist-Motordrehmoment Mi verglichen wird. Die hierzu benötigten Algorithmen sind in bekannten ACC- und Motormangementsystemen implementiert.

Für die so bestimmte ACC-Momentenanforderung $M_{ACC}$ wird in Schritt S3 geprüft, ob die folgende Bedingung erfüllt ist:

$$M_{ACC} \leq M_m + M_S. \tag{1}$$

Darin ist $M_S$ ein von der Motordrehzahl n abhängiger Drehmoment-Schwellenwert, dessen Drehzahlabhängigkeit qualitativ durch die in Figur 4 gezeigte Kurve gegeben ist.

Wenn die oben genannte Bedingung (1) nicht erfüllt ist (N), wird in Schritt S4 der zuvor in Schritt S3 bestimmte Zielgang um eine Stufe verringert, und der Prioritätsparameter wird auf "mittel" gesetzt. Danach erfolgt ein Rücksprung zu Schritt S3, wo die Überprüfung für den neuen Zielgang wiederholt wird.

Wenn die Überprüfung in Schritt S3 ein positives Ergebnis hat (J), wird in Schritt S5 überprüft, ob die beiden folgenden Bedingungen erfüllt sind:

$$n_{neu} < (n_{max} - n_1) \tag{2}$$

$$n_{neu} > (n_{min} + n_2) \tag{3}$$

In diesen Ungleichungen ist $n_{neu}$ die künftige Drehzahl, die sich bei der aktuellen Fahrzeuggeschwindigkeit $v_i$ aus dem Gesamt-Übersetzungsverhältnis im geltenden Zielgang ergeben würde, $n_{max}$ ist die maximal zulässige Drehzahl des Motors, $n_1$ ist eine Drehzahlreserve für eine mögliche weitere Drehzahlerhöhung, nmin ist die minimal zulässige Motordrehzahl und n2 ist eine Drehzahlreserve für mögliche weitere Drehzahlabsenkungen

Wenn die Bedingung (2) nicht erfüllt ist, wird in Schritt S6 der Zielgang um eine Stufe erhöht. Wenn die Bedingung (3) nicht erfüllt ist, wird in Schritt S6 der Zielgang um eine Stufe erniedrigt. In jedem Fall wird in Schritt S6 der Prioritätsparameter auf den Wert "hoch" gesetzt, und es erfolgt dann ein Rücksprung zu Schritt S5.

Wenn sich in Schritt S5 ergibt, daß beide Bedingungen (2) und (3) erfüllt sind, werden der zuvor bestimmte Zielgang und der bisherige Wert des Prioritätsparameters beibehalten. In Schritt S7 wird dann überprüft, ob der Zielgang mit der aktuellen Getriebestufe ii übereinstimmt. Wenn dies der Fall ist, wird die Programmroutine ohne Schaltaufforderung beendet. Andernfalls erfolgt in Schritt S8 eine Schaltaufforderung über die Anzeigeeinrichtung 28. Dabei wird dem Fahrer über die Ziffernanzeige 32 der einzulegende Zielgang mitgeteilt, und die Priorität oder Dringlichkeit, mit der die Schaltaufforderung zu befolgen ist, wird durch das Verhalten der pfeilförmigen Anzeigelampe kenntlich gemacht. Bei niedriger Priorität, wenn die Schaltaufforderung nur durch die Optimierung des Verbrauchs in Schritt S2 veranlaßt ist, leuchtet der Pfeil kurz auf und erlischt nach kurzer Anzeigedauer. Wenn die Schaltaufforderung eine mittlere Priorität hat, da sie in Schritt S3 durch den Beschleunigungsbedarf des ACC-Systems veranlaßt wurde, leuchtet die Schaltaufforderung 30 dauernd auf, beispielsweise in gelber Farbe. Wenn die Schaltaufforderung dagegen eine hohe Priorität hat, weil sie in Schritt S5 durch eine drohende Drehzahlüberschreitung oder -unterschreitung veranlaßt wurde, zeigt der Pfeil 30 einen Farbumschlag nach rot oder er blinkt. Wahlweise oder ergänzend kann, insbesondere bei hoher Priorität, eine akustische Schaltaufforderung erfolgen.

Durch den in Figur 3 gezeigten Programmablauf ist sichergestellt, daß sich eine etwaige Schaltaufforderung mit niedriger Priorität nur dann durchsetzen kann, wenn sie nicht mit einem der in den Schritten S3 und S5 überprüften Kriterien mit höherer Priorität in Konflikt gerät. So ist auf jeden Fall sichergestellt, daß der Motor weder zu hochtourig noch zu untertourig gefahren wird. Innerhalb dieser Grenzen wird ein ausreichendes Drehmoment für die ACC-Regelfunktion bereitgestellt, und nur wenn die ACC-Regelung ausreichend Spielraum läßt, wird die empfohlene Getriebestufe im Hinblick auf den Kraftstoffverbrauch optimiert.

Darüber hinaus ist durch die in Figur 4 gezeigte Drehzahlabhängigkeit des Drehmoment-Schwellenwertes $M_S$ sichergestellt, daß die Diskrepanz zwischen der ACC-Momentenanforderung $M_{ACC}$ und dem Maximaldrehmoment $M_m$ mit steigender Drehzahl n immer größer werden muß, damit in den Schritten S3 und S4 überhaupt noch eine Verringerung des Zielgangs erfolgt. Wie Figur 4 zeigt, nimmt der Drehzahl-Schwellenwert Ms mit zunehmender Drehzahl progressiv zu und wird bei einem bestimmten Drehzahlwert unendlich. Die in Figur 4 dargestellte Kurve läßt sich in der MMI-Steuereinheit 22 durch eine Funktionsvorschrift für eine stückweise definierte lineare Funktion oder wahlweise auch durch eine Funktionstabelle implementieren.

In die Bestimmung des Drehmoment-Schwellenwertes Ms können in einer modifizierten Ausführungsform auch noch andere Informationen und Maßnahmen einfließen, z. B. Abstand und Relativgeschwindigkeit des Zielobjektes, Querbeschleunigung des eigenen Fahrzeugs, Einbau einer zeilichen Hysterese, etc., um die Schaltaufforderung in bestimmten Situationen (Kurvenfahrten, kurzzeitiges Beschleunigen des Zielobjektes, etc.) zu erschweren oder zu unterbinden. Zum Beispiel könnte die Schaltaufforderung - zumindest bei Kriterien mit niedriger Priorität - erst dann an den Fahrer weitergeleitet werden, wenn sie sie über eine bestimmte Mindestzeitspanne fortbesteht.

Es versteht sich, daß die Funktionenen zur Bestimmung des Zielgangs und zur Entscheidung über die Schaltaufforderung nicht notwendigerweise in der MMI-Steuereinheit 22 nach Figur 2 erfolgen müssen, sondern beispielsweise auch von der ACC-Steuereinheit 14 übernommen werden können.

Besonders vorteilhaft ist die Erfindung in Kombination mit dem in DE 198 33 838 A1 beschriebenen Verfahren zur automatischen Wiederaufnahme der ACC-Regelung nach Betätigung der Kupplung. Die Information über den einzulegenden Zielgang läßt sich dann zweckmäßig dazu nutzen, bei betätigter Kupplung die Motordrehzahl automatisch an die neue Getriebestufe anzupassen, so daß ein ruckfreies Wiedereinkuppeln ermöglicht wird.


**Patentansprüche**

1.   Geschwindigkeitsregelvorrichtung für Kraftfahrzeuge (10) mit Handschaltgetriebe (24), mit einer Einrichtung (14) zur Bestimmung des Beschleunigungsbedarfs ($a_S$), einer Ausgabeeinrichtung (28) zur Ausgabe von Informationen an den Fahrer sowie einer Steuereinrichtung (22) hierfür, wobei die Ausgabeeinrichtung (28) und die zugehörige Steuereinrichtung (22) zur Ausgabe einer Schaltaufforderung (30) in Abhängigkeit vom Beschleunigungsbedarf ($a_S$) ausgebildet sind **dadurch gekennzeichnet, dass** die Steuereinrichtung (22) als Bedingung für die Ausgabe einer Schaltaufforderung (30) zum Herunterschalten prüft, ob das durch den Beschleunigungsbedarf ($a_S$) gegebene Motordrehmoment das verfügbare Motordrehmoment ($M_m$) um mehr als einen vorgegebenen Schwellenwert ($M_S$) übersteigt und dass der Schwellenwert ($M_S$) drehzahlabhängig ist.

2.   Geschwindigkeitsregelvorrichtung nach Anspruch 1, **dadurch gekennzeichnet, dass** sie einen Abstandssensor (12) für eine abstandsabhängige Geschwindigkeitsregelung aufweist.

3.   Geschwindigkeitsregelvorrichtung nach Anspruch 1, **dadurch gekennzeichnet, dass** der Schwellenwert ($M_S$) mit steigender Drehzahl (n) zunimmt.

4. Geschwindigkeitsregelvorrichtung nach einem der vorstehenden Ansprüche, **dadurch gekennzeichnet, dass** die Steuereinrichtung (22) als weitere Bedingung für die Ausgabe einer Schaltaufforderung (30) zum Herunterschalten prüft, ob die aktuelle oder nach Befolgung der Schaltaufforderung zu erwartende Motordrehzahl (n; $n_{neu}$) kleiner als ein vorgegebener Wert ist.

5. Geschwindigkeitsregelvorrichtung nach einem der vorstehenden Ansprüche, **dadurch gekennzeichnet, dass** die Steuereinrichtung (22) für die Ausgabe der Schaltaufforderung (30) mehrere Kriterien (S2, S3, S5) überprüft, denen unterschiedliche Prioritäten zugeordnet sind und dass bei einem Konflikt zwischen diesen Kriterien das Kriterium mit der höchsten Priorität die Schaltaufforderung bestimmt.

6. Geschwindigkeitsregelvorrichtung nach Anspruch 5, **dadurch gekennzeichnet, dass** eines der Kriterien (S5) die Einhaltung der Drehzahlgrenzen des Motors ist und dass dieses Kriterium eine höhere Priorität als das Kriterium (S3) hat, das sich auf den Beschleunigungsbedarf ($a_S$) bezieht.

7. Geschwindigkeitsregelvorrichtung nach Anspruch 5 oder 6, **dadurch gekennzeichnet, dass** eines der Kriterien (S2) sich auf die Wahl einer verbrauchsoptimierten Getriebestufe bezieht und dass dieses Kriterium eine niedrigere Priorität als das Kriterium (S3) hat, das sich auf den Beschleunigungsbedarf ($a_S$) bezieht.

8. Geschwindigkeitsregelvorrichtung nach einem der Ansprüche 5 bis 7, **dadurch gekennzeichnet, dass** die Ausgabeeinrichtung (28) dazu ausgebildet ist, zusätzlich zu der Schaltaufforderung (30) eine Information über die Priorität dieser Schaltaufforderung zu vermitteln.

9. Geschwindigkeitsregelvorrichtung nach einem der vorstehenden Ansprüche, **dadurch gekennzeichnet, dass** die Steuereinrichtung (22) dazu ausgebildet ist, einen Zielgang auszuwählen und dass die Anzeigeeinrichtung (28) dazu ausgebildet ist, mit der Schaltaufforderung (30) den Zielgang oder die Anzahl der Stufen anzuzeigen, um die das Handschaltgetriebe (24) herauf- oder herunterzuschalten ist.

### Claims

1. Speed control device for motor vehicles (10) with a manual gearbox (24), with a device (14) for determining the acceleration requirement ($a_S$), an output device (28) for outputting information to the driver and a control device (22) for the said output device, the output device (28) and the associated control device (22) being designed to output a gear changing request (30) as a function of the acceleration requirement ($a_S$), **characterized in that** the control device (22) checks, as a condition for the outputting of a gear changing request (30) to change down, whether the engine torque which is output by the acceleration requirement ($a_S$) exceeds the available engine torque ($M_m$) by more than a predefined threshold value ($M_S$), and **in that** the threshold value ($M_S$) is dependent on the rotational speed.

2. Speed control device according to Claim 1, **characterized in that** it has an inter-vehicle distance sensor (12) for speed control as a function of the inter-vehicle distance.

3. Speed control device according to Claim 1, **characterized in that** the threshold value ($M_S$) increases as the rotational speed (n) rises.

4. Speed control device according to one of the preceding claims, **characterized in that** the control device (22) checks, as a further condition for the outputting of a gear changing request (30) to change down, whether the current engine speed (n; $n_{new}$) or the engine speed (n; $n_{new}$) which is to be expected after the gear changing request has been met is lower than a predefined value.

5. Speed control device according to one of the preceding claims, **characterized in that** the control device (22) checks a plurality of criteria (S2, S3, S5) for the outputting of the gear changing request (30), the said criteria (S2, S3, S5) being assigned different priorities, and **in that** if there is a conflict between these criteria the criterion with the highest priority determines the gear changing request.

6. Speed control device according to Claim 5, **characterized in that** one of the criteria (S5) is compliant with the rotational speed limits of the engine, and **in that** this criterion has a higher priority than the criterion (S3) which relates to the acceleration requirement (as).

7. Speed control device according to Claim 5 or 6, **characterized in that** one of the criteria (S2) relates to the selection of a gear speed which is optimized for consumption, and **in that** this criterion has a lower priority than the criterion (S3) which relates to the acceleration requirement ($a_S$).

8. Speed control device according to one of Claims 5 to 7, **characterized in that** the output device (28) is designed to provide, in addition to the gear changing request (30), information about the priority of this gear changing request.

9. Speed control device according to one of the preceding claims, **characterized in that** the control device (22) is designed to select a target gear speed, and **in that** the display device (28) is designed to indicate, together with the gear changing request (30), the target gear speed or the number of gear speeds by which the manual gearbox (24) is to be changed up or down.

**Revendications**

1. Dispositif de régulation de vitesse pour véhicules automobiles (10) avec boîte de vitesses mécanique (24), comportant un dispositif (14) permettant la détermination de la demande d'accélération (as), un dispositif d'édition (28) permettant l'édition d'informations destinées au conducteur ainsi qu'un dispositif de commande (22) à cet effet, le dispositif d'édition (28) et le dispositif de commande (22) correspondant étant conçus pour éditer une invitation (30) à changer de vitesse en fonction de la demande d'accélération (as),
   **caractérisé en ce que**
   le dispositif de commande (22) vérifie, en tant que condition à l'édition d'une invitation (30) à rétrograder, si le couple moteur donné par la demande d'accélération ($a_S$) dépasse le couple moteur disponible ($M_m$) de plus d'une valeur de seuil prédéfinie (Ms), et la valeur de seuil ($M_S$) dépend du régime.

2. Dispositif de régulation de la vitesse selon la revendication 1,
   **caractérisé par**
   un détecteur de distance (12) pour une régulation de vitesse en fonction de la distance.

3. Dispositif de régulation de la vitesse selon la revendication 1,
   **caractérisé en ce que**
   la valeur de seuil ($M_S$) augmente au fur et à mesure que le régime (n) augmente.

4. Dispositif de régulation de la vitesse selon l'une des revendications précédentes,
   **caractérisé en ce que**
   le dispositif de commande (22) vérifie, comme autre condition pour l'édition d'une invitation (30) à rétrograder, si le régime moteur du moment ou à attendre (n ; $n_{neu}$) après avoir suivi l'invitation à changer de vitesse est inférieur à une valeur prédéfinie.

5. Dispositif de régulation de la vitesse selon l'une quelconque des revendications précédentes,
   **caractérisé en ce que**
   le dispositif de commande (22) vérifie, pour éditer l'invitation (30) à changer de vitesse, plusieurs critères (S2, S3, S5) auxquels sont affectées différentes propriétés, et
   en cas de conflit entre ces critères, le critère ayant la plus haute priorité détermine l'invitation à changer de vitesse.

6. Dispositif de régulation de la vitesse selon la revendication 5,
   **caractérisé en ce que**
   l'un des critères (S5) est le respect des limites de régime du moteur, et
   ce critère a une priorité plus haute que le critère (S3) qui se rapporte à la demande d'accélération (as).

7. Dispositif de régulation de la vitesse selon la revendication 5 ou la revendication 6,
   **caractérisé en ce que**
   l'un des critères (S2) se rapporte au choix d'un étage de boîte optimisé pour la consommation, et
   ce critère a une priorité inférieure à celle du critère (S3) qui se rapporte à la demande d'accélération (as).

8. Dispositif de régulation de la vitesse selon l'une des revendications 5 à 7,
   **caractérisé en ce que**
   le dispositif d'édition (28) est conçu pour transmettre, en plus de l'invitation (30) à changer de vitesse, une information sur la priorité de cette invitation à changer de vitesse.

9.  Dispositif de régulation selon l'une des revendications précédentes,
    **caractérisé en ce que**
    le dispositif de commande (22) est conçu pour sélectionner une vitesse cible, et
    le dispositif d'affichage (28) est conçu pour afficher, avec l'invitation (30) à changer de vitesse, la vitesse cible ou
    le nombre d'étages afin de passer une vitesse supérieure ou de rétrograder sur la boîte de vitesses mécanique (24).

*Fig. 1*

*Fig. 2*

**Fig. 3**

```
        ┌──────────────┐
        │    START     │────── S1
        └──────┬───────┘
               │
   ┌───────────────────────┐
   │ Bestimme Zielgang für ├──── S2
   │  minimalen Verbrauch  │
   │   Priorität = niedrig │
   └───────────┬───────────┘
               │←──────────────────────┐
               │                        │
               ▼              ┌──────────────────┐
  S3    ╱─────────────╲       │ Zielgang ändern  │
       ╱ ausreichendes ╲  N   │ Priorität = mittel│
       ╲ Moment für ACC?╱─────┘        │
        ╲──────┬───────╱              S4
               │ J
               │←──────────────────────┐
               │                        │
               ▼              ┌──────────────────┐
  S5    ╱─────────────╲       │ Zielgang ändern  │
       ╱ Drehzahlgrenzen╲  N  │ Priorität = hoch │
       ╲  eingehalten ? ╱─────┘        │
        ╲──────┬───────╱              S6
               │ J
  S8           ▼
┌───────────┐  N  ╱─────────────╲
│Schaltauff-│←────╱ Zielgang = iᵢ?╲──── S7
│orderung   │     ╲───────┬───────╱
│mit Zielgang│             │ J
│und Priorität│            ▼
└───────────┘       ┌──────────────┐
                    │     ENDE     │
                    └──────────────┘
```

S8: Schaltaufforderung mit Zielgang und Priorität

S7: Zielgang = $i_i$?

**Fig. 4**

$M_s$ vs $n$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19833838 A1

- EP 1034962 A1

**In der Beschreibung aufgeführte Nicht-Patentliteratur**

- Adaptive Cruise Control. Automotive Electronics Handbook. Mac Graw-Hill, 1999, vol. 2